(19)

Europäisches
Patentamt

European
Patent Office

Office européen
des brevets

(11) **EP 4 485 830 A1**

(12) **EUROPEAN PATENT APPLICATION**

(43) Date of publication:
**01.01.2025   Bulletin 2025/01**

(21) Application number: **23306026.8**

(22) Date of filing: **27.06.2023**

(51) International Patent Classification (IPC):
*H04L 5/00* (2006.01)        *H04L 27/00* (2006.01)

(52) Cooperative Patent Classification (CPC):
**H04L 5/005; H04L 5/0053; H04L 27/0006**

| | |
|---|---|
| (84) Designated Contracting States:<br>**AL AT BE BG CH CY CZ DE DK EE ES FI FR GB**<br>**GR HR HU IE IS IT LI LT LU LV MC ME MK MT NL**<br>**NO PL PT RO RS SE SI SK SM TR**<br>Designated Extension States:<br>**BA**<br>Designated Validation States:<br>**KH MA MD TN**<br><br>(71) Applicant: **Eurecom**<br>**06410 Biot (FR)** | (72) Inventors:<br>• **LE, Trung Kien**<br>  **06410 Biot (FR)**<br>• **WAGNER, Sebastian**<br>  **06410 Biot (FR)**<br>• **KNOPP, Raymond**<br>  **06410 Biot (FR)**<br><br>(74) Representative: **Atout PI Laplace**<br>**Immeuble Up On**<br>**25 Boulevard Romain Rolland**<br>**CS 40072**<br>**75685 Paris Cedex 14 (FR)** |

(54)     **SIDELINK-POSITIONING IN A COMMUNICATION SYSTEM**

(57)     There is provided a transmitting user equipment (1) configured to perform sidelink positioning by transmitting a sidelink positioning reference signal SL-PRS and associated sidelink control information SCI to at least one receiving user equipment (5) in a slot, using a dedicated resource pool. The SCI indicates the sidelink resources for the transmission of the SL-PRS. The transmitter user equipment (1) performs a Listen Before Talk LBT procedure to initiate a Channel Occupancy Time procedure COT. The transmitting user equipment is configured to transmit the SL-PRS in a SL-PRS occasion to the at least one receiving user equipment (5), if the LBT succeeds, and determine his position using responding sidelink positioning reference signals received from the receiving user equipment(s). A slot is divided into a plurality of mini-slots and the transmitting user equipment is configured to transmit the SCI and then the associated SL-PRS in the beginning of a mini-slot.

FIGURE 5

EP 4 485 830 A1

## Description

## TECHNICAL FIELD

The invention generally relates to digital communications and in particular to a sidelink positioning system and method.

## BACKGROUND

Due to the growing demand for wireless communications in terms of real-time services and applications with higher capacities, mobile communication systems have known major advances.

Mobile communication systems are rapidly progressing from a 4th generation (4G) mobile communication system to the future 5th generation (5G) mobile communication systems which are being standardized to provide rich, reliable and hyper-connected communications. In particular, 5G New Radio (NR) presents significant challenges. Next generation NR networks are in particular expected to increase throughput, coverage, and robustness and reduce latency.

A mobile communication system comprises a mobile communication network, one or more user terminals (also referred to as User Equipments UEs, according to 3GPP standard), and one or more base stations (also referred to as a Node, designated by a derivative of the term 'NodeB' such as gNodeB node or gNB in 5G NR). The base station is associated with a cell defining a geographical cell area. The cell associated with the base station is served by the base station.

While frequency bands were strictly limited to particular technologies (like TV and radio bands) or restricted to cell phone bands, unlicensed spectrum have been rendered available to foster innovation in the communication field. Unlicensed spectrum refers to radio frequencies that are open to any use and by anyone, as long as the devices fulfil technical rules.

In particular, in unlicensed spectrum, a transmitter is required to do Listen Before Talk (LBT) in order to acquire a channel prior to a transmission. There are two channel access mechanisms in LTE and 5G called:

- The load based equipment (LBE), and
- The frame based equipment (FBE) as described in "ETSI EN 301 893, 5 GHz RLAN; Harmonised Standard covering the essential requirements of article 3.2 of Directive 2014/53/EU (v2.1.1)," May 2017.

In LBE, a transmitter attempts to access to a channel whenever it has data to transmit. While in FBE, a transmitter attempts to access to a channel and starts a transmission at the fixed occasions.

In LBE, there are two types of channel access procedures comprising:

- Type 1 channel access procedures used for the User Equipment (UE)/base station (gNB) to acquire a channel and initiate a new Channel Occupancy Time (COT), and
- Type 2 channel access procedures used to allow the UE/gNB to transmit in a COT that is already initiated ("3GPP TS 37.213 v17.2.0, Physical layer procedures for shared spectrum channel access," 2022).

LBT Type 1 channel access procedures are done by the transmitter to obtain a new Channel Occupancy Time (COT). After obtaining a channel, the transmitter transmits data within COT.

LBT Type 1 channel access procedures comprise two steps:

- In the first step called initial Clear Channel Assessment (iCCA), the transmitter senses the channel in a defer duration containing a slot of t1 duration (t1 =16 $\mu$s for example) and $m_p$ slots of t2 duration (t2=9 $\mu$s for example).

- In the second step, after sensing the channel to be idle during a defer duration, the transmitter performs an extended Clear Channel Assessment (eCCA).

The transmitter senses the channel in N additional sensing slots where the duration of each sensing slot is t2. The counter N is a random number uniformly distributed between 0 and CWp where CWp is the value of Contention Window Size. The size of CWp is set to be the smallest allowed value in a priority channel access class and might be increased to a next higher allowed value depending on the percentage of ACK feedback corresponding to the latest transmission burst that ACK feedback is available.

In each sensing slot, if the transmitter senses an idle channel, it decrements the counter by 1. If the transmitter senses a busy channel in a sensing slot, it goes to a defer stage. In this stage, it senses the channel in an additional defer duration. The transmitter exits this stage and decrements the counter by 1 if the channel is sensed to be idle during all sensing slots of the additional defer duration. Otherwise, the transmitter is still in the deferring stage and has to sense the channel in another defer duration. When the counter reaches 0, the transmitter can transmit the packet and occupy channel in a duration of MCOT (maximum COT).

In a COT that is already initiated, the UE/gNB must do another LBT called Type 2 channel procedures before a transmission, if there is a gap between the current transmission and the last transmission. There are three types of Type 2 channel access procedures:

- Type 2A is done when the gap between two transmissions in an initiated COT is bigger than 25 $\mu$s. In Type 2A, the UE/gNB senses the channel in an interval of 25 $\mu$s and transmits data if the channel is sensed idle.

- Type 2B is done when the gap between two transmissions in an initiated COT is between 16 $\mu$s and 25 $\mu$s. In Type 2B, the UE/gNB senses the channel in an interval of 16 $\mu$s and transmits data if the channel is sensed idle.

- Type 2C is done when the gap between two transmissions in an initiated COT is smaller than 16 $\mu$s. In Type 2C, the UE/gNB does not sense the channel before the transmission.

In FBE, a transmitter attempts to access to a channel and starts a transmission at the fixed occasions. The period of these occasions is called fixed frame period (FFP) with a duration of 1, 2, 2.5, 4, 5 or 10 ms consisting of a COT and an idle period. The duration of idle period is at least 5% of the duration of fixed frame period but not smaller than 100 $\mu$s. The transmitter does channel sensing within 9 $\mu$s in a single observation slot of 25 $\mu$s within the idle period. If the channel is busy, the transmitter waits until the observation slot in the next FFP to attempt to access to the channel. If the channel is idle, the transmitter occupies the channel in a COT and stops the transmission before the idle period.

User Equipments (UEs) that send data must advertise the upcoming transmission by broadcasting signaling messages over the Physical Sidelink Control Channel (PSCCH).

The Third Generation Partnership Project (3GPP) in its Release 16 introduces the Vehicle to-Everything (V2X) standard based on the 5G New Radio (NR) air interface. 5G NR V2X introduces advanced functionalities to support connected and automated driving use cases and is in particular focused on sidelink communication.

In NR V2X, the physical channels and slot structure have been standardized to support the direct communication between the devices ("3GPP TS 38.211: Physical channel and modulation V17.2.0," 2022).

In Release 16 and Release 17, sidelink communication is standardized for communication in licensed spectrum.

According to the slot structure with physical channels, there are a number of symbols in a slot, including:

- the first symbol called Automatic gain control (AGC) is a copy of the second symbol. It is used to adjust the power of the received signal to reduce quantization error or the clipping of the signal at the analog to digital converter.

- The physical sidelink control channel (PSCCH) is in the next two or three symbols after AGC symbol. PSCCH contains the first stage sidelink control information (SCI) to indicate, among other parameters, the resources of the physical sidelink shared channel (PSSCH) carrying the transmission of a transport block. As the receiver device does not know the position of PSCCH in the PSCCH resource, it has to decode blindly the PSCCH candidates in the PSCCH resource to find PSCCH using a blind algorithm (to search among possible SCI formats and resource allocations). In the symbols with PSCCH, PSSCH is multiplexed with PSCCH in frequency division multiplexing (FDM). The rest of the symbols in the slot structure except the last one is used for PSSCH and DMRS (DeModulation Reference Signal) of PSSCH.

- PSSCH carries the second stage of SCI and data payload. The second stage of SCI contains the information used to decode PSSCH, transmit HARQ feedback, etc. The last symbol is a gap to ensure enough time for switching between transmission and reception and vice versa.

A slot generally further comprises the Physical Sidelink Feedback Channel (PSFCH) that carries feedback related to the successful or failed reception of a sidelink transmission (HARQ feedback).

To determine the position of a user equipment (UE) in a sidelink communication, a UE can:

- transmit a sidelink-positioning reference signal SL-PRS to a target UE and receives back a measurement report, forming the responding SL-PRS, from the target UE, or

- transmit a sidelink-positioning reference signal SL-PRS to a plurality of target UEs and receives back the SL-PRSs responses from the plurality of target UEs and then calculate the time difference of arrivals among the received SL-PRS responses using a positioning method using at least SL (SideLink) measurements such as a round-trip-time-type method, a sidelink-angle-of-arrival method, a sidelink-angle-of-departure method, or a sidelink-time-difference-of-arrival method.

SL-PRS can be transmitted in a dedicated resource pool or a shared resource pool. In a dedicated resource pool, there are only SL-PRS resources and control information SCI which can be multiplexed with the SL-PRS to indicate SL-PRS resource. A dedicated resource pool is configured in the only SL bandwidth part of a carrier. In a shared resource pool, SL-PRS is multiplexed with other physical channels such as PSCCH, PSSCH, PSFCH.

SL-PRS resource is allocated in two schemes as the legacy sidelink communication.

In the first scheme, the network, such as a base station gNB, allocates resource for SL-PRS that is similar to a legacy Mode 1 solution where SL-PRS resource allocation is a network centric-operation. The base station gNB allocates SL-PRS resource to the UE after receiving a scheduling request from the UE. The UE can then use the allocated resource to transmit the SL-PRS signal to another UE.

In the second scheme, a UE autonomously chooses SL-PRS resource similar to a legacy Mode 2 solution. The UE chooses SL-PRS resources based on sensing or random selection.

In a slot, SL-PRS resource has a comb pattern in the frequency domain where the SL-PRS signal of a UE occupies every $N^{th}$ sub-carrier. The value of N (comb size) can take the candidate values {1, 2, 4, 6, 8, 12}. A comb Size N defines the resource element spacing in frequency domain for each symbol of a DL-PRS resource.

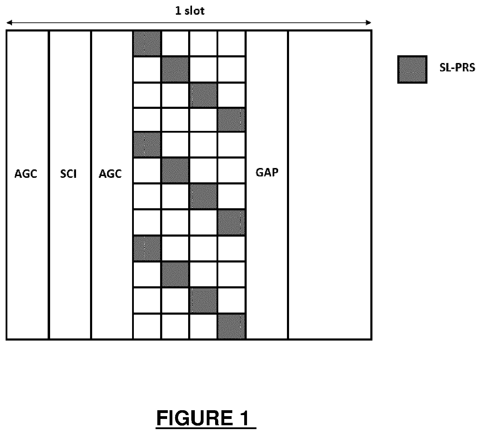

In the time domain, the SL-PRS signal occupies M symbols excluding the symbols used for AGC and for the gap of the slot structure. The potential candidate values of M comprise 1, 2, 4, 6, 8, 12 symbols (other values of M are not excluded). Figure 1 shows an example of SL-PRS with a comb-size of 4 and 4 symbols.

In Release 18, the operation of sidelink communication is extended to unlicensed spectrum to support the commercial use cases such as interactive gaming, Internet of Everything, etc. with an increase of data rate.

Sidelink positioning therefore needs to be improved to be compatible with such evolution of the sidelink communication.

In a dedicated resource pool, the slot structure for sidelink positioning transmission needs to be designed to support sidelink positioning transmission in unlicensed spectrum. A sidelink positioning reference signal (SL-PRS) occupies M symbols in a slot with the candidates of M being 1, 2, 4, 6, 8, 12 symbols (other values of M are not excluded) excluding the symbols used for AGC and gap. This means that a SL-PRS of a UE might not occupy a whole slot. In this case, SL-PRSs of multiple UEs can be multiplexed in a slot in time division multiplexing (TDM) in the dedicated resource pool. The locations of each user equipment SL resources are indicated by an associated SCI transmitted at the beginning of a slot as the legacy slot structure of the sidelink communication.

In unlicensed spectrum, each user equipment has to do a Listen Before Talk procedure (LBT) to initiate a Channel Occupancy Time before transmitting its SCI and SL-PRS. When the communication system comprises several user equipments transmitting their sidelink positioning reference signals SL-PRS and associated SCI in a same slot, a second LBT might be performed by a given user equipment in case of a gap between the SCI and the associated SL-PRS signal of the given user equipment due to the interposed transmission of the SL-PRS signal of another user equipment transmitting in the same slot. The transmission of SL-PRS signal of the given user equipment, separated from its SCI by such gap, might be even blocked by the SL-PRS transmission of another user equipment or by other WIFI devices' transmission. This causes a loss of SL-PRS or a latency in determining the user equipment position.

The slot structure and transmission scheme of SL-PRS in existing sidelink positioning approaches using a dedicated resource pool therefore impede an efficient transmission in unlicensed spectrum. Therefore, an improved positioning method is required allowing the UE to cope with the uncertainty of LBT is required.

In a shared resource pool, the SL-PRS signal is transmitted with other physical channels such as PSCCH, PSSCH, PSFCH.

In a slot, PSCCH has only one occasion (called 'PSCCH occasion') configured at the beginning of a slot, starting from the second symbol with a duration of two or three symbols, so that a user equipment only can start a transmission at the beginning of a slot.

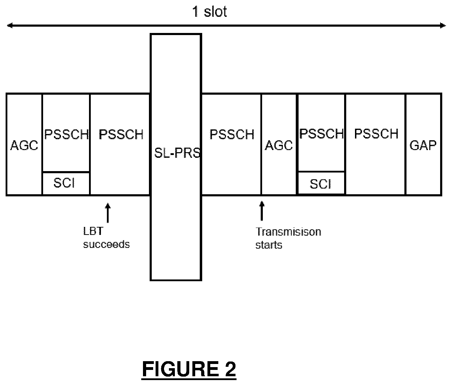

The SL-PRS signal requires large bandwidth so that the symbols used for SL-PRS can be configured with a larger bandwidth compared to the symbols used for PSCCH, PSSCH, PSFCH. In unlicensed spectrum, a UE has to do LBT (Listen Before Talk procedure) before transmitting. Because of LBT uncertainty, a UE might acquire the channel after the first starting position with PSCCH occasion in a slot as shown in Figure 2. Further, the UE cannot transmit SL-PRS in that slot even if LBT succeeds before the SL-PRS occasion and the UE has to wait until the next SL-PRS resource. This causes latency in determining position of a UE.

There is accordingly a need for devices and methods enabling improved sidelink positioning method and system, in particular in unlicensed spectrum.

**Summary of the invention**

In order to address these and other problems, there is provided a transmitting user equipment configured to perform sidelink positioning to determine the transmitter user equipment position. The transmitting user equipment is configured to transmit a sidelink positioning reference signal SL-PRS and associated sidelink control information SCI to at least one receiving user equipment in a slot, using a dedicated resource pool to perform the sidelink positioning, the SCI indicating the sidelink resources for the transmission of the SL-PRS signal. The transmitting user equipment is configured to initiate a Channel Occupancy Time procedure COT before transmitting the SCI and the SL-PRS signal to the at least one receiving user equipment, the transmitting user equipment being configured to perform a Listen Before Talk LBT procedure to initiate the COT. The transmitting user equipment is configured to :

- transmit the sidelink positioning reference signal SL-PRS in a SL-PRS occasion, to the at least one receiving user equipment, if the Listen Before Talk procedure succeeds, and

- determine the transmitter user equipment position using one or more responding sidelink positioning reference signals $SL\text{-}PRS_R$, each being received from one of the at least one receiving user equipment.

A slot is divided into a plurality of K mini-slots, the location of the sidelink (SL) resources to be used for the transmission of the reference signal SL-PRS by the transmitting user equipment being indicated by the associated SCI, the transmitting user equipment being configured to transmit the SCI and then the associated SL-PRS in the beginning of a mini-slot.

In some aspects, a mini slot may comprise:

- an Automatic Gain control AGC field comprising symbols used for level control at the beginning of the mini-slot ;

- the SCI information ;

- the signal SL-PRS ; and

- a gap comprising symbols used as guard periods.

The transmitting user equipment may be configured to use its sidelink control information SCI to reserve a SL-PRS resource in a mini-slot that is different from the mini-slot where that sidelink control information SCI is transmitted.

The SCI may further comprise a Channel Occupancy Time (COT) sharing authorization flag indicating whether a receiving user equipment is allowed to use the COT initiated by the transmitting user device to transmit the responding SL-PRS.

In some embodiments, the transmitting user device may be configured to determine its position using a sidelink positioning method, such as a Round-trip-time (RTT) based technique, a sidelink Angle-of-Arrival (SL-AoA) technique, a sidelink Time-Difference-of-Arrival (SL-TDOA) or a sidelink Angle-of-Departure (SL-AoD) technique.

The transmitting user equipment may be configured to reserve SL-PRS resources in a mini-slot using its associated sidelink control information SCI for the transmission of the responding SL-PRS sent back by a receiving user equipment.

In one aspect, the comb pattern and/or the length of the sidelink positioning reference signal SL-PRS transmitted from the transmitting user equipment and/or the comb pattern and/or the length of the responding reference signal SL-PRS$_R$ transmitted from the at least one receiving user equipment, in the reserved resource, may be indicated in the sidelink control information SCI transmitted by the transmitting user equipment.

There is further provided a communication system comprising at least two user equipments connected through a wireless communication network, the user equipments comprising at least one transmitting user equipment according to any preceding feature and at least one receiving user equipment.

In one embodiment, in response to the receipt of a sidelink positioning reference signal SL-PRS and of a sidelink control information SCI from a transmitting user equipment, a receiving user equipment may be configured to decode the received SCI to determine the location of SL-PRS resource.

In some embodiments, the system may comprise a group of multiplexed user equipments comprising two or more transmitting user equipments, the sidelink positioning reference signal SL-PRS of a transmitting user equipment in the group of multiplexed user equipments being multiplexed with the sidelink positioning reference signal SL-PRS of the other transmitting user equipments of the group, in one or more mini-slots, in time division multiplexing (TDM) or in frequency division multiplexing (FDM).

A transmitting user equipment in the group of multiplexed user equipment may be configured to start transmitting its respective sidelink positioning reference signal SL-PRS and its associated sidelink control information SCI in a mini-slot that is different from the mini-slot used by at least another transmitting user equipment of the group.

A transmitter user equipment of the system may be configured to transmit a SL-PRS signal at a starting position in a mini-slot, and wherein the system is adapted to pre-configure a starting position in each mini-slot and/or the length of each mini-slot for each resource pool.

In one embodiment, the group of multiplexed user equipments may comprise different sets of user equipments, the sidelink positioning reference signals of the user equipments of at least one set $S_{UI}^{(p)}$ of User equipments being multiplexed with each other in a given mini-slot MS$_k$ of the slot, in frequency division multiplexing (FDM), while the sidelink positioning reference signals of the user equipments of at least another set $S_{UI}^{(p')}$ of User equipments of the group are multiplexed with each other in another mini-slot of the time slot, in time division multiplexing (TDM).

In some aspects, a transmitting user equipment may be configured to share its initiated Channel Occupancy Time procedure (COT) with other user equipments of the group of multiplexed user equipments, the other user equipments using the shared COT to transmit their respective sidelink positioning reference signals to a receiving user equipment that is different from the transmitting user equipment that initiated the COT.

The SCI transmitted by a transmitting user equipment may include in this case:

- a group COT sharing indicator indicating a list of identifiers of user equipments in the group of multiplexed user equipments that are allowed to use the COT initiated by the transmitting user device; and/or

- a COT duration indicating the duration of the COT.

In particular, a user equipment sharing a COT initiated by a given transmitting user equipment may be configured to use a cyclic prefix extension selected so that the gap between the SL-PRS transmission of the transmitting user equipment and the SL-PRS transmission of the user equipment sharing the COT initiated by the transmitting user equipment is smaller than the predefined threshold T.

The user equipment using the shared COT of a transmitting user device which initiated the COT may be configured to transmit its reference signal SL-PRS to a user equipment that is different from the transmitting user device.

In one embodiment, the system may comprise a transmitting user equipment configured to transmit its sidelink positioning reference signal SL-PRS1 and sidelink control information SCI to a target user equipment of the system, the transmitting user equipment initiating a first COT, and the system comprises another transmitting user equipment initiating a second COT, the target user equipment being configured to use the second COT initiated and shared by the second transmitting user equipment to transmit its SCI and its respective sidelink positioning reference signal to the transmitting user equipment which initiated the first COT.

The transmitting user equipment which initiated the first COT may be configured to reserve resource, using its sidelink control information, for the target user equipment for the transmission of the responding sidelink positioning reference signal from the target user equipment to the transmitting user equipment.

In one embodiment, the target user equipment may be configured to include in its SCI, sent to the another transmitting user equipment, an indication that it uses the COT initiated by the another transmitting user equipment and that the target user uses the second COT initiated by the another transmitting user equipment to transmit SL-PRS to the transmitting user equipment which initiated the first COT.

In one aspect, a user equipment may be configured to determine which COT to use among COTs initiated and shared by transmitting user equipments of the system, using SL-PRS priority information associated with the SL-PRS of the transmitting user equipments of the system.

There is further provided a method for determining the sidelink position of a transmitter user equipment in a communication system, the method comprising transmitting a sidelink positioning reference signal SL-PRS and associated sidelink control information SCI to at least one receiving user equipment in a slot, using a dedicated resource pool, the SCI indicating the sidelink resources for the transmission of the SL-PRS signal, wherein the method comprises initiating a Channel Occupancy Time procedure COT before transmitting the SCI and the SL-PRS signal to the at least one receiving user equipment, the method comprising performing a Listen Before Talk LBT procedure to initiate the COT. The method comprises :

- transmitting the sidelink positioning reference signal SL-PRS in a SL-PRS occasion, to the at least one receiving user equipment, if the Listen Before Talk procedure succeeds, and
- determining the transmitter user equipment position using one or more responding sidelink positioning reference signals SL-PRS$_R$, each being received from one of the at least one receiving user equipment

a slot being divided into a plurality of K mini-slots, the location of the sidelink (SL) resources to be used for the transmission of the reference signal SL-PRS by the transmitting user equipment being indicated by the associated SCI, the method comprising transmitting the SCI and then the associated SL-PRS in the beginning of a mini-slot.

The embodiments of the invention enable an efficient transmission particularly suitable for unlicensed spectrum. In a communication system using a dedicated resource pool, they enable a user equipment to cope with the uncertainty of LBT is required.

In a communication system using a shared resource pool, they enable reduction latency and blocking probability.

## Brief description of the drawings

The accompanying drawings, which are incorporated in and constitute a part of this specification, illustrate various embodiments of the invention together with the general description of the invention given above, and the detailed description of the embodiments given below.

Figure 1 illustrates an exemplary SL-PRS comb size of 4 and 4 symbols, according to the prior art.

Figure 2 illustrates a SL-PRS non-transmission due to LBT uncertainty, according to the prior art.

Figure 3 depicts an exemplary communication system in which embodiments of the invention may be implemented to perform positioning of a user equipment.

Figure 4 depicts an exemplary V2X application of the invention to perform positioning of a user equipment.

Figure 5 depicts a transmitting user equipment according to some embodiments.

Figure 6 depicts a slot structure for SL-PRS in a dedicated resource pool, adapted for unlicensed spectrum, according to embodiments of the invention.

Figure 7 shows an exemplary comb pattern representing multiplexing of multiple user equipments in time-division multiplexing (TDM) and frequency-division multiplexing (FDM), in a slot subdivided into a plurality of mini-slots, according to embodiments of the invention.

Figure 8 represents Channel Occupancy Time (COT) sharing for a SL-PRS transmission according to some embodiments of the invention.

Figure 9 represents a slot structure used in a sidelink transmission according to an embodiment in which COT sharing is used in a set of user equipment multiplexed in TDM in a slot.

Figure 10 represents a slot structure corresponding to embodiment in which a user equipment uses a COT to transmit SL-PRS to another user equipment that is different from the user equipment that initiated the COT.

Figure 11 depicts an exemplary slot structure using the SCI to back-indicate SL-PRS, in an embodiment using a shared pool of resources.

Figure 12 depicts an exemplary slot structure in which the SL-PRS occasion is configured after the second starting position with a PSCCH occasion, in embodiments using a shared pool of resources.

Figure 13 depicts an exemplary slot structure in which the SL-PRS resource is configured in a mini-slot structure, in embodiments using a shared pool of resources.

Figure 14 shows a slot structure in which dummy data are transmitted in a PSSCH physical channel, according to an embodiment.

Figure 15 shows a slot structure in which a PSCCH occasion is dedicated to indicate the SL-PRS resource, according to an embodiment.

Figure 16 is a flowchart representing a sidelink positioning method for positioning a transmitting user equipment using a dedicated resource pool.

Figure 17 is a flowchart representing a sidelink positioning method for positioning a transmitting user equipment using a shared resource pool.

## Detailed description

Embodiments of the present invention provide devices and methods for improved sidelink positioning in a sidelink transmission.

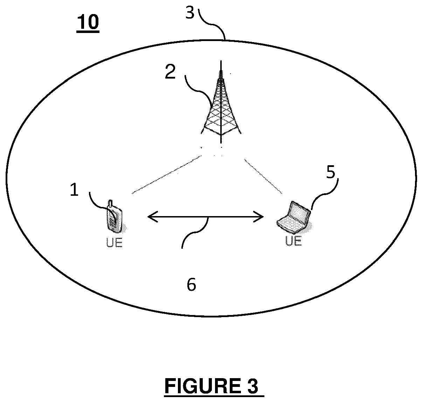

Figure 3 illustrates an exemplary communication system 100 in which embodiments of the instant disclosure may be implemented. The communication system 10 may be for example a wireless communication system. The following description of embodiments of the invention will be made mainly with reference to a wireless communication system for illustration purpose although the skilled person will readily understand that the invention can also apply to other types of communication systems such as a wired system (for example optical fiber communication system).

The communication system 100 may comprise at least one transmitter device 1 configured to transmit a plurality of information symbols to at least one receiver device 5 through a wireless communication network 3 using a communication channel 6.

The receiver device 5 may be configured to receive a signal transmitted by the transmitter device 1 and decode the received signal to recover the original data.

The transmitter device 1 is configured to transmit digital data comprising information symbols to one or more receiver device 5 through the communication channel. A receiver device 5 receives and decodes the signal transmitted by the transmitter device 1 using a reverse processing that is the reverse to the processing implemented at the transmitter. The digital data transmitted by the transmitter 1 may comprise user data bits and control data bits.

The transmission channel may be any transmission channel adapted to transmit information symbols from the transmitter device 1 to the receiver device 5, depending on the type of the communication system, such as for example a wireless medium or any wireless propagation medium adapted to communication between the wireless devices 1 and 5.

In some applications of the invention to wireless communication systems such as ad-hoc wireless networks used in local area communications, wireless sensor networks and radio communication systems (e.g. LTE, LTE-advanced, 5G and beyond), the transmitter device 1 and/or the receiver device 5 may be any type of fixed or mobile wireless devices configured to operate in a wireless environment.

The transmitter device 1 and/or the receiver device 5 may be fixed or mobile and/or may be remotely monitored and/or controlled. The transmitter device 1 and/or the receiver device 5 may be equipped with power sources that provide power to the different components ensuring the operation of these devices (e.g. dry cell batteries, solar cells, and fuel cells).

The communication network 3 may represent any wireless network enabling IoT. Exemplary wireless networks comprise low-power short range networks and LPWANs. Exemplary LPWAN technologies comprise LTE-NB1 and NB-IoT.

Further, the communication network 3 may accommodate several pairs of transmitter devices 1 and receiver devices 5. In such embodiments, multiple access techniques and/or network coding techniques may be used in combination with error correction codes and modulation. Exemplary multiple access techniques comprise Time Division Multiple Access (TDMA), Frequency Division Multiple Access (FDMA), Code Division Multiple Access (CDMA), and Space Division Multiple Access (SDMA).

The communication channel 6 between the transmitter device 1 and the receiver device 5 may be a noisy channel. For example, the noise may result from the thermal noise of the system components and/or the intercepted interfering radiation by antennas. Other exemplary sources of noise comprise switching, manual interruptions, electrical sparks and lightning. In some embodiments, the total noise may be modeled by an additive white Gaussian noise (AWGN).

The communication channel 6 may be a multipath channel using single-carrier or multi-carrier modulation formats such as OFDM (Orthogonal Frequency Division Multiplexing) for mitigating frequency-selectivity, interference and delays.

The transmitter device 1 and/or the receiver device 5 may be equipped with a plurality of transmit and/or receive antennas. In such embodiments, space-time coding and/or space-time decoding techniques may be used in combination with coded modulations for encoding data both in the time and space dimensions, thereby exploiting space and time diversities of multiple antennas.

The transmitter device 1 and the receiver device 5 may be each implemented as a wireless user device, such as a User Equipment, each capable of transmitting and receiving user data and control data such as sidelink data. In such case, the wireless user device comprises both a transmission unit to act as a transmitter device and a reception unit to act as a receiver device.

A User Equipment may be, without limitation, a mobile phone, a computer, a laptop, a tablet, a drone, a vehicle, an IoT device etc.

To facilitate the understanding of the present disclosure, the following description of some embodiments of the invention will be made with reference to a transmitter device 1 and a receiver device 5 both implemented as User Equipments, where the transmitter device 1 transmits sidelink transmission to the receiver device 5 and the receiver device 5 is configured to receive the sidelink transmissions from the transmitter device 1, although the skilled person will readily understand that the two devices 1 and 5 can act in the reverse direction when implemented as user equipments. The transmitter device 1 is configured to perform sidelink positioning to determine its position by transmitting a sidelink positioning reference signal SL-PRS to at least one receiver device 1.

A transmitter device 1 will be also referred to hereinafter as a "transmitter" or a "transmitting user equipment" and a receiver UE 5 will be also referred to hereinafter as a "receiver" or a "receiving user equipment".

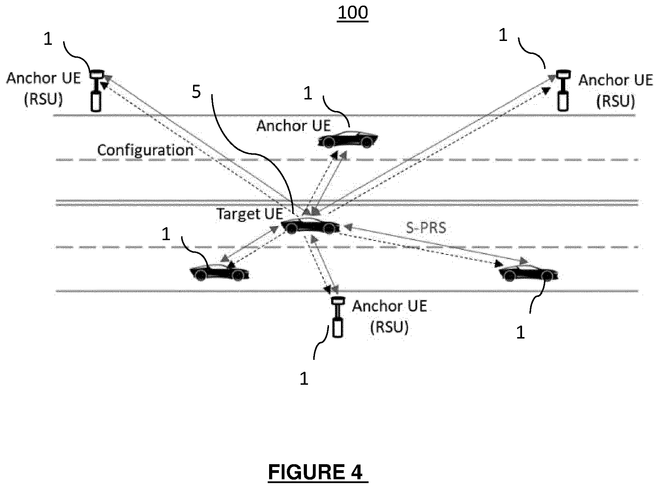

Figure 4 depicts an exemplary V2X communication system in which the embodiments of the invention may be implemented to perform positioning of a user equipment UE. The V2X communication system 100 comprises a plurality of transmitting UE 1 implemented as Roadside Units (RSU), also referred to as "anchor UEs", and a receiver UE 5 implemented as a vehicle, also referred to as a "target UE", such as for example an automated or autonomous vehicle.

The communication system 100 performs sidelink (SL) positioning to position the target UE 5. The position of the target UE 5 is determined using at least one anchor UE 1 that transmits or receives a SL-PRS signal over a direct communication interface (PC5) and provides the information related to the position of the target UE 5. In Figure 4, the target UE 5 (vehicle) can transmit a SL-PRS signal or receive a SL-PRS signal from the anchor UEs 1 (RSUs). Based on the known locations of the anchor UEs 1, the target UE 5 determines its absolute position. The target UE 5 can also transmit a SL-PRS signal or receive SL-PRS signal from another vehicle in Figure 4. The target UE 5 can determine also the distance or the direction between two UEs in the ranging operation. In the case of figure 4, the target UE 5 determines its relative position.

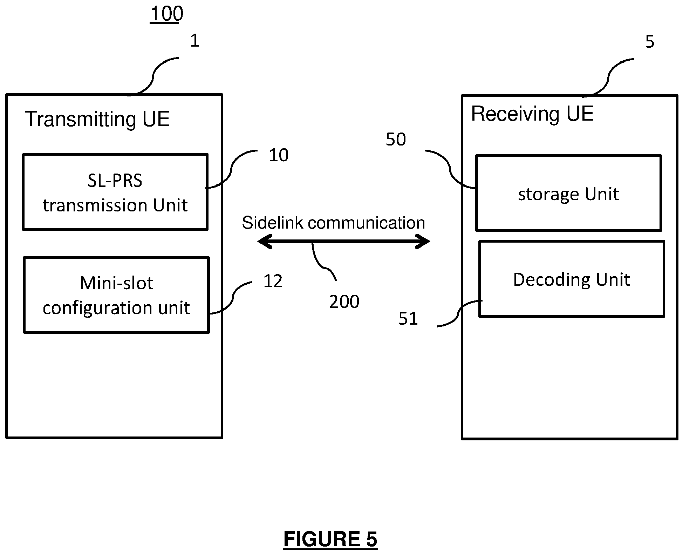

As shown in Figure 5, the transmitter device 1 comprises a sidelink transmission unit 12 configured to transmit a sidelink positioning reference signal SL-PRS and associated sidelink control information SCI to at least one receiving user equipment in a slot, using a dedicated resource pool or a shared resource pool (in this case the SL-PRS signal is transmitted with one or more physical channels which are transmitted in physical channel occasions).

The SCI indicates the sidelink resources to be used for the transmission of the SL-PRS signal of the transmission user equipment.

The transmission unit 12 is configured to initiate a Channel Occupancy Time procedure COT before transmitting the SL-PRS signal to the at least one receiving user equipment, the transmitting user equipment being configured to perform a Listen Before Talk LBT procedure to initiate the COT.

The transmitting user equipment 1 further comprises a sidelink positioning unit 14 configured to perform sidelink positioning to determine the transmitter user equipment position.

The sidelink positioning unit 14 is configured to determine the transmitter user equipment position using one or more responding sidelink positioning reference signals SL-PRS$_R$, each being received from one of the at least one receiving user equipment.

At the receiving side, the receiving user equipment 5 is configured to monitor a current slot to detect a sidelink transmission.

The receiving user equipment 5 may comprise a slot storage unit 52 configured to store the received symbols and a detection unit 54 configured to decode the received SCI and to decode the received SL-PRS symbols using the information included in the decoded SCI.

The receiving user equipment 5 may comprise a slot storage unit 52 configured to store the received symbols and a detection unit 54 configured to decode the received SCI and to decode the received SL-PRS symbols using the information included in the decoded SCI.

The receiving user equipment 5 is further adapted to send back a responding $SL\text{-}PRS_R$ signal in response to the receipt of the SL-PRS signal received from the transmitting user equipment 1.

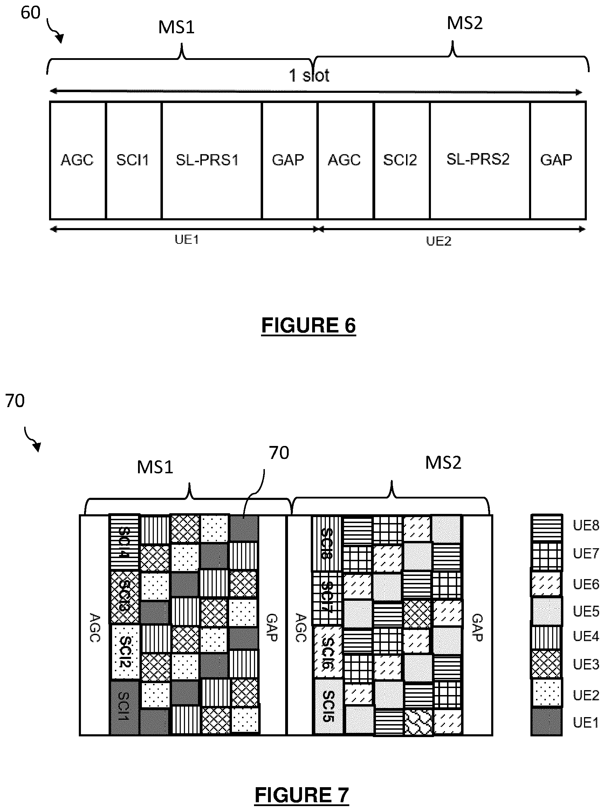

Figure 6 depicts a slot structure 60 for SL-PRS in a dedicated resource pool, adapted for unlicensed spectrum, according to embodiments of the invention. In a dedicated resource pool, only SL-PRS resources and control information SCI carried on PSCCH may be multiplexed with the SL-PRS to indicate SL-PRS resource.

Embodiments of the invention provide an improved slot structure for the SL-PRS dedicated resource pool, particularly adapted for an unlicensed spectrum.

A slot (or time slot) includes a plurality of symbols in the time domain (for example OFDM symbol in a communication system 100 using OFDM modulation). A slot may comprise a cyclic prefix (CP) which is a copy of the last portion of the symbol appended before the symbol. The CP may be a normal or extended CP.

A slot is part of a frame structure that comprises a plurality of subcarriers in the frequency domain. A resource block (RB) refers to a plurality of consecutive subcarriers in the frequency domain.

According to some embodiments of the invention, a slot (or 'slot') may be divided into a plurality of $K$ mini-slots $MS_k$ (a mini-slot can be also referred to as a 'sub-slot'), with k comprised between 1 and $K$.

The UE 1 may transmit the SCI information at the beginning of a mini-slot instead of only transmitting the information at the beginning of a slot as performed according to a conventional slot-based transmission.

The transmitting user equipment 1 may be configured to further transmit the SL-PRS signal in the same mini-slot as the mini-slot used to transmit the associated SCI. Alternatively, the transmitting user equipment 1 may transmit the SCI and the associated SL-PRS in separate mini-slots.

In some embodiments, the communication system 100 may comprise a plurality of user equipments $UE_i$ 1, with $i$ comprised between 1 and $M$, each emitting a $SL\text{-}PRS_i$ and an associated $SCI_i$ in the same time slot that is divided into a plurality of mini-slots, the $SCI_i$ indicating the SL resources used by user equipment $UE_i$ to transmit its associated $SL\text{-}PRS_i$.

The $SL\text{-}PRS_i$ of the different User equipment $UE_i$ may be multiplexed with each other emitting UEs in the slot, in time division multiplexing (TDM) and/or frequency division multiplexing (FDM), in a dedicated resource pool such that the SL resources that each $UE_i$ uses to transmit its $SL\text{-}PRS_i$ are multiplexed in the slot in TDM with each other.

Advantageously, the $UE_i$ can be configured to start transmitting in different mini-slots of the slot in order to multiplex their respective $SL\text{-}PRS_i$ in TDM in the slot.

In the example of Figure 6, there are two mini-slots MS1 and MS2 in a slot.

A mini slot $MS_k$ comprises, in the following order:

- a AGC (Automatic Gain control) field comprising symbols used for level control at the beginning of the mini-slot;

- the $SCI_i$ information associated with a user equipments $UE_i$;

- the signal $SL\text{-}PRS_i$ associated with the user equipment $UE_i$ and with the $SCI_i$; and

- a gap comprising symbols used as guard periods for switching between sidelink reception and transmission.

In the example of figure 6, two user equipments 1 are transmitting SCI and SL-PRS, comprising a user equipment $UE_1$ associated with $SCI_1$ and signal SL-PRS,, and $UE_2$, associated with $SCI_2$ and signal $SL\text{-}PRS_2$.

The UE1 is configured to transmit SCI1 and SL-PRS1 in the first mini-slot MS1 and the UE2 is configured to transmit SCI2 and SL-PRS2 in the second mini-slot MS2. The mini-slot structure 60 allows multiplexing the UEs in TDM in a slot and the multiplexed user equipments $UE_i$ can transmit their respective $SCI_i$ and $SL\text{-}PRS_i$ continuously without a gap in a mini-slot so that a user equipment $UE_i$ does not have to carry out an additional LBT to transmit its $SL\text{-}PRS_i$, as if there was a gap between the $SCI_i$ and the associated $SL\text{-}PRS_i$ in the slot-based transmission with only one starting position for SCI.

The location of the $SL\text{-}PRS_i$ resource to be used for the $SL\text{-}PRS_i$ is indicated by the associated $SCI_i$ transmitted at the beginning of the same mini-slot. The $SCI_i$ may be transmitted based on interlaced resource block transmission to meet occupied channel bandwidth (OCB) requirement. Alternatively, OCB exemption may be applied in embodiments where the SCI is comprised in the PSCCH so that the SCI can be transmitted in the contiguous Resource Blocks (RBs) in a subchannel, like the PSCCH transmission in licensed spectrum.

In some embodiments, for a slot in a dedicated resource pool where a mini-slot structure is used, the starting position and/or length of a mini-slot in a slot may be pre-configured per resource pool.

The configurations of a mini-slot, including configurations of which user equipment transmits in a mini-slot, the mini-slot time and frequency domain, may be pre-configured or configured by the base station (gNB) for example through DCI (Downlink Control Information) or RRC (Radio Resource Control).

The durations of the mini-slots can be different depending on the requirements of the transmitted SL-PRS. In some embodiments, the number of mini-slots per slot may depend on the number of the multiplexed User Equipment and the duration of SL-PRS.

In a shared resource pool, a back-indication of SCI to SL-PRS or a mini-slot structure allows the transmission of SL-PRS after a successful LBT instead of waiting until the next PSCCH occasion.

A positioning reference signal SL-PRS may be mapped to a time-frequency resource used for sending a positioning reference signal, the time-frequency resource includes multiple continuous symbols.

The UE may transmit SL-PRS signals in a symbol of a subframe. The SL-PRS may have a comb pattern, and a UE 1 may transmit the SL-PRS on one of the combs. The comb pattern is associated with a comb size indicating the number of subcarriers in each symbol period carrying a SL-PRS (i.e. resource element spacing in frequency domain for each symbol of the SL-PRS resource). For example, a comb size of comb-4 means that every fourth subcarrier of a given symbol carries the SL-PRS signal, while a comb size of comb-6 indicates that every sixth subcarrier of a given symbol carries the PL-SRS signal.

As used herein, a SL-PRS resource refers to a set of resource elements that are used for transmission of SL-PRS. The set of resource elements can span multiple Physical Resource Blocks (PRBs) in the frequency domain and N consecutive symbol(s) (e.g. OFDM symbol(s)) within a slot in the time domain.

The SL-PRS signal is transmitted by a UE 1 in a comb pattern where the UE 1 uses every $N^{th}$ subcarrier for transmitting a SL-PRS, with N taking values among {1, 2, 4 ,6 ,8, 12}.

The mini-slot structure allows multiplexing SL-PRSs of multiple UEs in a slot in TDM. while further ensuring a continuous transmission between SCI and SL-PRS of a user equipment in a slot so that the user equipment does not have to do an additional LBT before transmitting its SL-PRS.

In some embodiments, based on the comb pattern, a group of multiple user equipments $UE_i$ 1 can be multiplexed in a slot in time-division multiplexing (TDM) and/or in frequency-division multiplexing (FDM). The value $N$ of the comb pattern and the number of symbols $M$ that a user equipment $UE_i$ uses for transmitting the SL-$PRS_i$ may be indicated by its associated $SCI_i$.

In some embodiments, the group of multiplexed User equipments $UE_i$ comprises at least two sets $S_{UI}^{(p)}$ of user equipments $UE_i$, whereas the SL-$PRS_i$ $S_{UI}^{(p)}$ of at least one set $S_{UI}^{(p)}$ of User equipments $UE_i$ are multiplexed with each other in a given mini-slot $MS_k$ of the time slot, in frequency division multiplexing (FDM), in a dedicated resource pool, while the SL-$PRS_i$ of at least another set $S_{UI}^{(p')}$ of User equipment $UE_i$ are multiplexed with each other in another mini-slot of the time slot (such as for example the next mini-slot $MS_{K+1}$ following the given mini-slot $MS_k$), in time division multiplexing (TDM).

Figure 7 shows a comb pattern 70 representing multiplexing of multiple user equipments $UE_i$ 1 in both in in time-division multiplexing (TDM) and frequency-division multiplexing (FDM), in a slot subdivided into a plurality of mini-slots, according to embodiments of the invention.

In figure 7, time is represented horizontally and frequency is represented vertically. The block 70 of figure 7 represents a resource block and each small block 700 represents a resource element. A transmitting user equipment 1 and a receiving user equipment 5 may exchange sidelink communications based on a resource allocation scheme. According to the resource allocation scheme, the resources are mapped in time and frequency domains. The smallest unit in a sidelink (SL) communication is the Resource Element (RE). A RE is composed by a subcarrier, and a modulation symbol (for example OFDM symbol if OFDM modulation is used). A number of subcarriers (SC) form a Resource Block, and a time slot is associated with to subcarrier spacing and P modulation symbols. The frequency domain comprises a number of subchannels with a number of RBs in each one.

In figure 7, the shaded boxes representing the resource elements carry a SL-PRS signal or are scheduled to carry such a signal.

In the example of Figure 7, four user equipments UE1, UE2, UE3 and UE4 of a first set of user equipments $S_{UI}^{(1)}$ are multiplexed in frequency-division multiplexing (FDM) to transmit in the first mini-slot $MS_1$. Each user equipment UE1, UE2, UE3 and UE4 uses a 4-comb pattern (that is every fourth subcarrier of a given symbol carries the PL-SRS signal), corresponding to the vertical direction, and 4 symbols to transmit SL-PRS, one symbol for AGC, one symbol for SCI ($SCI_1$, $SCI_2$, $SCI_3$, $SCI_4$ associated respectively with UE1, UE2, UE3 and UE4) and one symbol for gap (in the horizontal direction). Further, the user equipments UE5, UE6, UE7 and UE8 of a second set of user equipments $S_{UI}^{(2)}$ are multiplexed in FDM to transmit in the second mini-slot

$MS_2$, also using a 4-comb pattern, 4 symbols to transmit SL-PRS ($SL\text{-}PRS_5$, $SL\text{-}PRS_6$, $SL\text{-}PRS_7$, $SL\text{-}PRS_8$ associated respectively with UE5, UE6, UE7 and UE8), one symbol for AGC, one symbol for SCI ($SCI_5$, $SCI_6$, $SCI_7$, $SCI_8$ associated respectively with UE5, UE6, UE7 and UE8) and one symbol for gap (in the horizontal direction).

In some embodiments, a User equipment 1 can use SCI to reserve a SL-PRS resource in a mini-slot $MS_k$ that is different from the mini-slot $MS_{k'}$ where that SCI is transmitted.

A SL-PRS resource can be reserved by a transmitting UE 1 to transmit the next SL-PRS signal or by a receiving UE 5 to transmit a responding SL-PRS signal in response to the receipt of a SL-PRS signal from the transmitting UE 1. In such embodiment, the SCI may further comprise a COT (Channel Occupancy Time) sharing authorization flag indicating whether the receiving UE 5 can use the COT initiated by the transmitting UE 1 to transmit the responding SL-PRS.

The location of the transmitting user equipment 1 may be determined by any suitable SL positioning method, such as for example and without limitations a Round-trip-time (RTT) type based technique, a sidelink Angle-of-Arrival (SL-AoA) technique, a sidelink Time-Difference-of-Arrival (SL-TDOA) or a sidelink Angle-of-Departure (SL-AoD) technique.

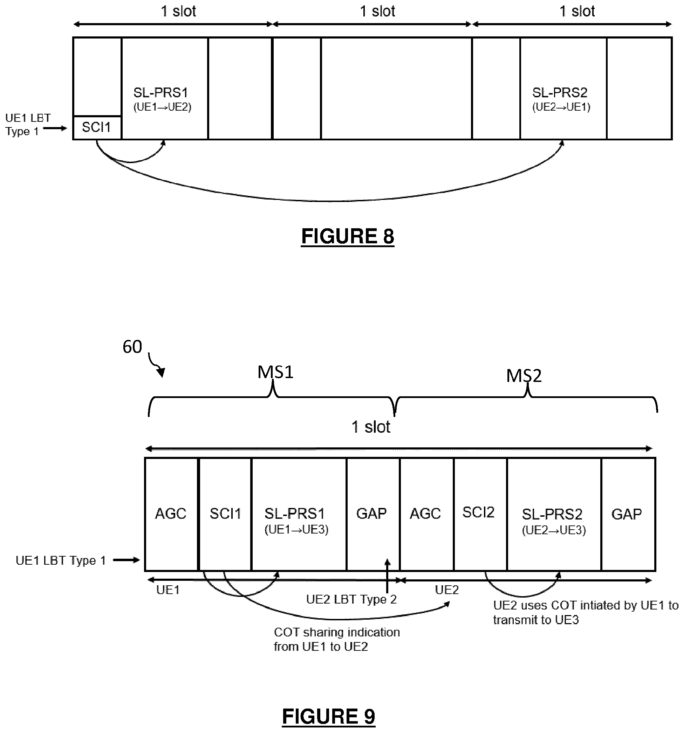

Figure 8 represents Channel Occupancy Time (COT) sharing for a SL-PRS transmission according to some embodiments of the invention.

A transmitting user equipment UE1 may reserve a resource crossing mini-slot using its associated SCI (SCI1) for the responding SL-PRS (SL-PRS2) of the receiving signal emitted by at least one receiving user equipment UE2.

In such embodiment, as illustrated in figure 8, the transmitting user equipment UE1 may be configured to transmit a SL-PRS1 signal to at least one receiving user equipment UE2 and further reserves resource for the at least receiving user equipment UE2 so that each receiving user equipment UE2 can send the responding SL-PRS2 signal to the transmitting user equipment UE1. The transmitting user equipment UE1 can then determine its location using a SL positioning technique to calculate a relative positioning between the transmitting UE 1 and the at least one receiving user equipment UE2, such as a positioning technique based on Round-trip-time (RTT). In a RTT method, a first UE (transmitting UE) transmits SL-PRS to the second UE (receiving UE). The second UE then replies to the first UE by sending another SL-PRS (responding SL-PRS). The first UE uses the duration between transmitting the first SL-PRS and receiving the second SL-PRS to estimate the distance between it and the second UE. The reserved resource for the at least one user equipment UE2 may be advantageously indicated in the control information SCI that the transmitting user equipment UE1 transmits, that is SCI1, to the at least one receiving user equipment UE2. The control information SCI that the transmitting user equipment UE1 transmits (SCI1) may also indicates the resource location of the SL-PRS that the UE1 transmits (SL-PRS1) to the at least one user equipment UE2 so that the UE2 can find the SL-PRS1 transmitted from the transmitting user equipment UE1. The comb pattern and/or the length of the reference signal SL-PRS transmitted from the transmitting user equipment UE1 (SL-PRS1) and of the responding reference signal SL-PRS transmitted from the at least one receiving user equipment UE2 (SL-PRS2) in the reserved resource for each receiving user equipment UE2 may be indicated in the control information SCI that the transmitting user equipment (SCI1).

The transmitting user equipment UE1 initiates a Channel Occupancy Time (COT) before transmitting its SCI (SCI1) and its SL-PRS signal (SL-PRS1) to the at least one receiving user equipments UE2 .

To initiate the COT, the transmitting user equipment UE1 may perform a Listen Before Talk (LTB) procedure. If the LBT succeeds the transmitting user equipment UE1 is configured to transmit its SCI (SCI1) and reference signal (SL-PRS1) to the at least one receiver user equipment UE2, in a SL-PRS occasion, within the obtained new COT.

In some embodiments, the transmitting user equipment UE1 can share its initiated COT with other user equipments UEs in the set of user equipments $S_{UI}^{(p)}$ (referred to hereinafter as the 'multiplexing set') which are multiplexed (in FDM or TDM) to transmit in a same mini-slot $MS_k$, even these other user equipments UEs are not the receiving user equipments, i.e user equipments being the destination of SL-PRS transmitted from the transmitting UE (SL-PRS1). Such user equipments of the same multiplexing set $S_{UI}^{(p)}$ can use the shared COT to transmit SL-PRS to a user equipment UE that is different from the transmitting user equipment UE1 that initiated the COT.

In such embodiments, the SCI (SCI1) that the transmitting user equipment UE1 transmits as a broadcast signal may include:

- a COT sharing indicator indicating a list of identifiers identifying the user equipments of the group of multiplexed user equipments or of the same multiplexing set that are allowed to use the COT shared by the transmitting user device UE1; and/or

- a COT duration indicating the duration of the COTs.

Therefore, COT sharing according to some embodiments, enables a sharing user equipment to use a COT initiated by another user equipment (COT-initiating user equipment) even if the sharing user user equipment does not transmit its SL-PRS in that COT to the COT-initiating UE. By using the shared COT, the sharing user equipment avoids using LBT Type 1 to initiate its own COT or even avoids a LBT Type 2 if it starts its transmission immediately after the transmission of the COT-initiating UE. This enables reducing latency and blocking probability.

Figure 9 represents a slot structure 60 used in a sidelink transmission according to embodiments of the invention, according to an embodiment in which COT sharing is used in a set $S_{UI}^{(p)}$ of user equipment multiplexed in TDM in a slot.

In the example of figure 9, the multiplexing set $S_{UI}^{(p)}$ comprises a first user equipment UE1 and a second user equipment UE2 multiplexed in TDM in a slot in a dedicated resource pool to transmit their respective reference signal SL-PRS. There is only one resource for SCI at the beginning of the slot after the AGC field.

The user equipment UE2 uses a shared COT to transmit its SL-PRS (SL-PRS2) to another user equipment UE3 that is different from the user equipment UE1 which initiated the COT. The first user equipment UE1 transmits its SCI (SCI1) and its SL-PRS (SL-PRS1) in a first mini-slot MS1 of a slot whereas the second user equipment transmits its SCI (SCI2) and its SL-PRS (SL-PRS2) in a second mini-slot MS2 of the same slot.

According to the prior art approaches related to unlicensed spectrum, when the first user equipment UE1 or the second user equipment UE2 want to transmit a reference signal SL-PRS (SL-PRS1 or SL-PRS2) to another user equipment such as a third user equipment UE3, it needs do a Listen Before Talk procedure (LBT procedure) of type 1 to initiate a COT. For example, if the first user equipment UE1 has a successful LBT and acquires a COT, it can transmit its SCI (SCI1) and its reference signal SL-PRS (SL-PRS1) to the third user equipment UE3. Similarly, the UE2 also needs to do a LBT Type 1 to initiate a COT to transmit its SCI (SCI2) and its SL-PRS (SL-PRS3) to the UE3.

Embodiments of the invention obviate the need for performing the second LBT Type 1 procedure, which might fail if channel is occupied by another UE. Indeed, according to embodiments of the invention, the first user equipment UE1 may share its obtained COT with the second user equipment UE2 of the same multiplexing set $S_{UI}^{(p)}$ so that the second user UE2 can use this shared COT to transmit its reference signal SL-PRS (SL-PRS2) to the third user equipment UE3.

As shown in figure 9, there is a gap symbol between the SL-PRS transmission (SL-PRS1) of the first user equipment UE1 and the SL-PRS transmission (SL-PRS2) of the second user equipment UE2 sharing the COT of the first user equipment UE1. The presence of the interposed gap may require an additional LBT (LBT Type 2) as shown in Figure 9 before the second user equipment UE2 transmits its SL-PRS signal (SL-PRS2) if the gap symbol is higher than a predefined threshold T (for example 16 μs). To avoid the additional LBT of type 2 that is due to interposed gap symbol, in some embodiments, the second user equipment UE2 may use a cyclic prefix extension (i.e. cyclic prefix extension for the AGC symbol) to fill the gap symbol between the SL-PRS transmission (SL-PRS1) of the UE1 and the SL-PRS transmission (SL-PRS2) of the second user equipment UE2. This means that a user equipment UE2 sharing the COT of the transmitting user equipment UE1 having initiated the COT, and therefore transmitting its SL-PRS (SL-PRS2) subsequently within the same COT to another user equipment UE3 (different from the transmitting user equipment UE1 having initiated the COT), may transmit a longer cyclic prefix (i.e. longer than the normal cyclic prefix which may have typically a duration of 4.69 us for SCS of 15 kHz, or of 2.34 us for SCS of 30 kHz, 1.17 us for SCS of 60 kHz, SCS being the acronym of Sub-carrier Spacing) to guarantee that the gap between the SL-PRS transmission of the UE1 and the SL-PRS transmission of the UE2 is smaller than the predefined threshold T.

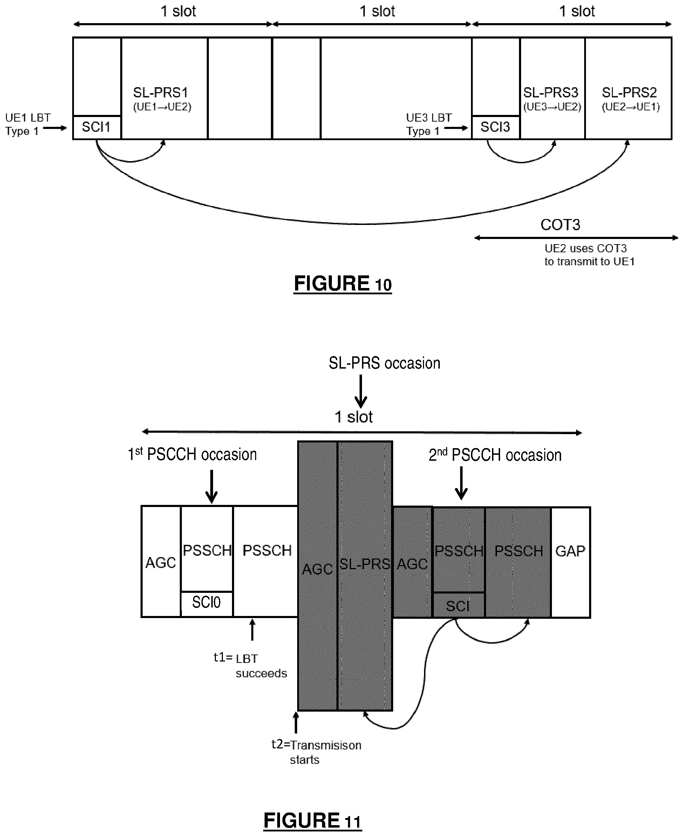

In some embodiments, a user equipment UE may use a COT to transmit its reference signal SL-PRS to another UE that is different from the user equipment UE that initiating the COT, as illustrated in figure 10.

Figure 10 represents an embodiment where a first user equipment UE1 transmit its SL-PRS (SL-PRS1) to a second user equipment UE2 in a first slot after initiating a COT (COT1), while a third user equipment UE3 initiates another COT (COT3) to transmit, in a third slot, its SL-PRS (SL-PRS3) to the second user equipment UE2. The second user equipment UE2 uses the shared COT initiated by the third user equipment UE3 (COT3) to transmit its SL-PRS (SL-PRS3) to the first user equipment UE1 within COT3 in a third slot.

It should be noted that the representation of figure 10 is simplified so that it does not show the mini-slots in each slot, for simplification purpose, while the slot structure of figure 6 does have a mini-slot structure. In particular, in the first slot, SCI1 and SL-PRS1 do not occupy a whole slot but only a part of a slot that is in a mini-slot. The rest of the first slot is for other mini-slots.

A Round-trip-time (RTT) type technique may be used to determine the location of the first user equipment UE1.

The SL-PRS1 resource used by the first user equipment UE1 to transmit SL-PRS reference signal SL-PRS1 to the second user equipment UE2 is indicated by the SCI of the first user equipment UE1 (SCI1). The first user equipment UE1 also reserves resource for the second user equipment UE2 so that the second user equipment UE2 can transmit its responding reference signal SL-PRS2 to the first user equipment UE1, using its transmitted SCI (SCI1). The reserved resource is accordingly indicated to the second user equipment UE2 by SCI1.

After the first user equipment UE1 transmits its SCI1 and its reference signal SL-PRS1 to the second user equipment UE2, the third user equipment UE3 transmits its reference signal SL-PRS3 to the second user equipment UE2 in a resource which is before the resource reserved for the second user equipment UE2 to transmit to the first user equipment UE1. In such case, the transmission of the reference signal SL-PRS3 of the third user equipment UE3 might block the transmission of the reference SL-PRS2 of the second user equipment UE2 in the reserved resource because the second user equipment UE2 cannot acquire the channel before the beginning of the reserved resource (as used herein, "acquiring a channel" refers to the initiation of a COT).

To avoid being blocked by the transmission of the third user equipment UE3, the second user equipment UE2 can use the COT initiated by the third user equipment UE3 (COT3) to transmit its reference signal SL-PRS2 to the first user equipment UE1. By using the COT initiated by the third user equipment UE3, the second user equipment UE2 can transmit in the reserved resource without an additional LBT if the gap between SL-PRS3 transmission and SL-PRS2 transmission is smaller than the threshold T. A cyclic prefix extension in SL-PRSs transmission can be used to guarantee the gap being smaller than the threshold T. The second user equipment UE2 may send its SCI (SCI2) with an indication to the third user equipment UE3 that it uses the COT initiated by the third user equipment UE3 (COT3) to transmit its SL-PRS (SL-PRS2) to another UE (UE1). In some embodiments, the second user equipment UE2 can decide to use the COT initiated by the UE3 to transmit its reference signal SL-PRS2 based on a priority information associated with its reference signal SL-PRS2. For example, the priority information may indicate a transmission priority between the reference signals of the user equipments of the group of multiplexed user equipments (for example, it may indicate that SL-PRS2 has higher priority than SL-PRS3). The priority of SL-PRS from the UE3 to the UE2 may be indicated by the associated SCI or RRC. The priority of SL-PRS from the UE2 to the UE1 might be indicated by SCI transmitted by the UE1 to reserve the resources or RRC.

In some embodiments, the SL-PRS transmission may be performed in a shared resource pool, such as for example in an unlicensed spectrum. In a shared resource pool, SL-PRS is transmitted with one or more physical channels, such as for example PSCCH, PSSCH, PSFCH (in contrast a dedicated resource pool is configured only in the sidelink bandwidth part of a carrier), which are transmitted in physical channel occasions.

The following description of some embodiments of the invention will be made with reference to a physical channel occasion corresponding to a PSCCH occasion and to transmission of PSCCH and PSSCH physical channels for illustration purpose.

A PSSCH is associated with a PSCCH. A PSSCH may for example comprise transport blocks such as user data traffic, in a V2X application of the disclosure. The PSCCH carries Sidelink Control Information (SCI) messages which comprise a description of the dynamic transmission properties of the PSSCH.

A PSCCH is associated with a PSCCH resource and a PSSCH is associated with a PSSCH resource.

A PSSCH transmission is made within a slot. A slot comprises at least one starting position for a PSCCH occasion with a number of PSCCH candidates, the PSCCH transmission being sent using a PSCCH occasion.

In some embodiments of the invention using a shared resource pool, a transmitting user equipment may be configured to transmit a physical channel (e.g. PSCCH) carrying the SCI in a physical channel occasion to indicate the reference signal SL-PRS, in a slot, a slot comprising two occasions to transmit the PSCCH carrying SCI and up to two occasions to transmit the SL-PRS indicated by the associated PSCCH, the location of the sidelink (SL) resources of the transmitting user equipment is indicated by the transmitted SCI.

In some aspects, the transmitter user equipment may use a back-indication of SCI to SL-PRS or a mini-slot structure to allow the transmission of SL-PRS after a successful LBT instead of waiting until the next physical channel occasion (PSCCH occasion).

In one embodiment using a shared resource pool, a transmitting user equipment UE may transmit its reference signal SL-PRS in response to a successful LBT, without transmitting previously an associated SCI transmitted before, after the first starting position with a physical channel occasion (for example PSCCH occasion). After transmitting the reference signal SL-PRS, the transmitting user equipment may transmit a physical channel (e.g. PSCCH) carrying the SCI in the next physical channel occasion to back indicate the reference signal SL-PRS transmitted before. This SCI may be also used to indicate the location of a physical channel in the next symbols. This SCI may be used to reserve resource for the SL-PRS and the physical channel in the next slots.

At the receiver side, the receiving user equipment may store the received SL-PRS symbols sent by the transmitting user equipment, if it does not detect SCI in the first PSCCH occasion. In response to the detection of the SCI in the second PSCCH occasion, the receiving user equipment may decode the received SCI, and if the receiving user equipment successfully decodes the received SCI in the second PSCCH occasion, it may search the SL-PRS in the stored symbols based on the indication provided in the decoded SCI and find them.

Figure 11 depicts an exemplary slot structure using the SCI to back-indicate SL-PRS, in an embodiment using a shared pool of resources.

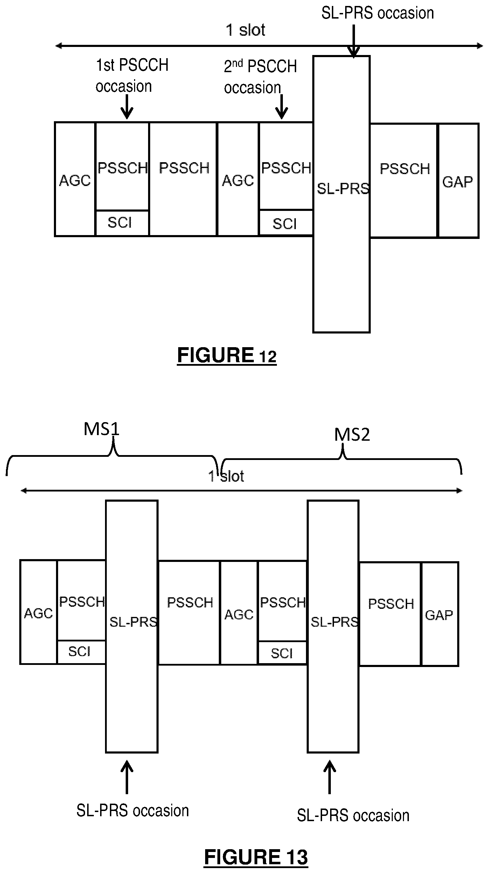

In the shared resource pool of figure 11, there are two starting positions with two PSCCH occasions in a slot where SCI is carried by PSCCH (in figure 11 and similarly in figure 12-15, the PSCCH is indirectly represented as SCI is carried by PSCCH so that SCI represents PSCCH occasions). In figure 11, the SL-PRS symbols used for the transmission of the SL-PRS signal are configured in the same slot with PSCCH and PSSCH. A transmitting user equipment succeeds in LBT (at t1) and acquires a channel after the first starting position with the PSCCH occasion and before the SL-PRS occasion. To avoid wasting SL-PRS resource and latency, the UE may transmit SL-PRS (transmission starts at t2), at the SL-PRS occasion, without transmitting an SCI associated with the SL-PRS before to indicate the SL-PRS resource. Instead, the SCI associated with the SL-PRS is transmitted after the transmission of the associated SL-PRS signal, in the second PSCCH occasion, to back indicates the location of SL-PRS transmitted in the previous symbols. The same SCI is also used to indicate the PSSCH location in the next symbols. This SCI can reserve resource for SL-PRS and PSSCH in the next slots. It should be noted that the LBT procedure is successful after the first PSCCH (SCI) occasion so the UE cannot transmit PSCCH carrying SCI in the first occasion. For this reason, the first SCI occasion (SCI0) is empty.

In some aspects, the SCI may include an a posteriori SCI flag indicating a posterio SCI being sent to back indicate the location of the SL-PRS in received symbols.

The a posteriori SCI flag may be a one-bit flag included in SCI to notify the receiving user equipment that a SCI is sent after the SL-PRS transmission to back indicate the location of the SL-PRS in the previous SL-PRS occasion. The receiving user equipment may use the flag to determine where to find the SL-PRS in the configured SL-PRS symbols that were previously stored by the receiving user equipment.

In some embodiment, the SCI may comprise an additional field (also referred to as 'frequency-domain indicator') to indicate the frequency domain of the SL-PRS transmission.

In one embodiment, the SL-PRS occasion may be configured after the second starting position with a PSCCH occasion, as shown in Figure 12, to guarantee that the SL-PRS transmission is always indicated by a SCI transmitted within the same slot if LBT is successful. The transmitting user equipment 1 may then perform LBT and if it acquires the channel before the first starting position with a PSCCH occasion or the second starting position with a PSCCH occasion, it may transmit SCI before SL-PRS transmission to indicate the SL-PRS resource.

In another aspect, in embodiments using shared resources, the SL-PRS resource may be configured in a mini-slot structure, as depicted in Figure 13. In such embodiments, the SL-PRS resources may be configured on two occasions corresponding to two starting positions in a slot. The transmitting user equipment may perform LBT and acquire the channel to transmit AGC, and SCI at the beginning of a mini-slot MS1 or MS2. A SCI transmitted in a mini-slot MS1 or MS2 indicates the resource of the SL-PRS signal transmitted in that mini-slot MS1 or MS2. The SCI can reserve resources for the SL-PRS signal in the next mini-slots for the transmitting user equipment and/or the receiving user equipment UE (responding SL-PRS in this case if the receiving user equipment is required to transmit SL-PRS to respond to the transmitting UE).

SL-PRS is transmitted with one or more physical channels.

In embodiments where the SL-PRS is transmitted in a shared resource pool with one or more physical channels, in case the user equipment has no data to transmit in one of the physical channels, there will be a gap between the SCI and the SL-PRS. With such a gap, a user equipment would be required to carry out another LBT before transmitting the SL-PRS signal. To avoid carrying out such an additional LBT, in some embodiments, a user equipment may be configured to transmit dummy data or insert a copy of the SL-PRS in the physical channel for which the user has no data to transmit. If the user equipment is a receiving user equipment, the receiving UE may use advantageously a copy of SL-PRS in this physical channel, as dummy data, to increase the reliability of the SL-PRS.

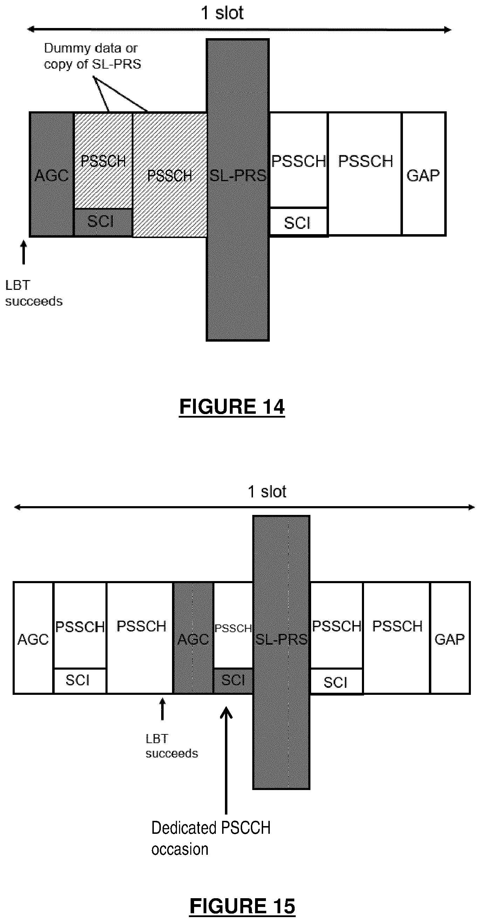

Figure 14 shows a slot structure in which dummy data are transmitted in a PSSCH physical channel. As shown in figure 14, the user equipment has no data to transmit in the PSSCH. To avoid a gap between the SCI and the SL-PRS, the user equipment transmits dummy data in the PSSCH or inserts a copy of the SL-PRS in the PSSCH.

Alternatively, to avoid a gap between the SCI and the SL-PRS when a user equipment has no data to transmit in a physical channel with which the SL-PRS is transmitted in a shared resource pool, while the user has to transmit SL-PRS, in one embodiment, the user equipment may be adapted to configure a dedicated PSCCH occasion to be only used to indicate the SL-PRS resource. The configured PSCCH occasion is associated with the SL-PRS. As shown in Figure 15, a PSCCH occasion is dedicated to indicate the SL-PRS resource. In this way, SL-PRS can be transmitted without any gap between PSCCH and SL-PRS no matter whether the UE has data to transmit in PSSCH or not. The Automatic gain control (AGC) is a copy of the second symbol. The Automatic Gain Control (AGC) symbol (represented by a shaded box in figure 15) before the PSCCH occasion that is associated with the SL-PRS may be used for PSSCH or SL-PRS depending on whether the UE has data to transmit in the PSSCH or not.

In some aspects, if the user equipment UE has data to transmit on PSSCH but has no SL-PRS data to transmit on the SL-PRS symbols, the user equipment may be configured to transmit dummy data by copying data on the PSSCH to the SL-PRS symbols to fill the gap in the middle due to the empty SL-PRS symbols. This enables the user equipment UE to keep the channel in a COT without having to do another LBT after the empty SL-PRS symbols. In a shared resource pool, the SL-PRS may be configured with a comb-size of 1. In this case, the user equipment may use the SL-PRS symbols to transmit PSSCH if the user equipment has no SL-PRS to transmit.

The sidelink data transmission may be performed through an activated BWP. A BWP is defined for NR as a contiguous set of physical resource blocks, selected from a contiguous subset of the common resource blocks for a given numerology on a given carrier. In the frequency domain, a resource pool is divided into sub-channels which are consecutive and non-overlapping Physical Resource Blocks (PRBs). The frame structure includes a maximum of number of BWPs.

According to some embodiments, the SL-PRS may be spread in multiple bandwidth parts (BWP) (e.g. of 20 MHz), while other channels such as PSCCH, PSSCH, PSFCH may be spread in a BWP (for example of 20 MHz). The user equipment carries on LBT on each BWP (e.g. of 20 MHz) to acquire a channel. The SCI in a BWP may indicate the SL-PRS resources in all the configured BWPs. If the user equipment cannot acquire the channel to transmit SCI in a BWP, it cannot indicate SL-PRS resources in other BWPs so that the user equipment does not need to transmit SL-PRS in other BWPs. In some embodiments, the BWP with PSCCH may be the main channel. The user equipment may only transmit SL-PRS if the LBT is successful in the main channel. Otherwise, it may stop SL-PRS transmission in all BWPs. The user equipment may perform LBT Type 1 to access to the main channel containing SCI and may sense the other BWPs for a sensing interval as LBT Type 2A to transmit SL-PRS if LBT in the main channel is successful.

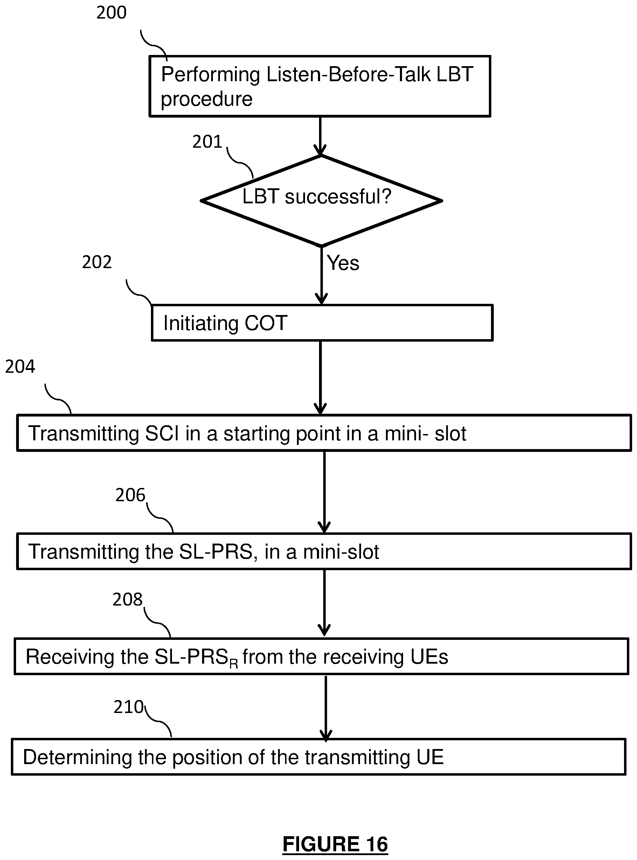

Figure 16 is a flowchart representing a sidelink positioning method for positioning a transmitting user equipment using dedicated resources.

In step 200, a Listen Before Talk procedure is performed to initiate Channel Occupancy Time procedure COT,

In step 202, if the LBT is successful (block 201), a Channel Occupancy Time procedure COT is initiated by the transmitting user equipment.

In step 204, the sidelink control information SCI is sent by the transmitting user equipment in a mini-slot, the SCI indicating the location of the Sidelink resources for the transmission of the sidelink positioning reference signal SL-PRS, to the one or more receiving user equipments.

The SCI may be decoded by each receiving user equipment to determine the location of SL-PRS resource.

In step 206, the sidelink positioning reference signal SL-PRS is sent by the transmitting user equipment in the same mini-slot, in a SL-PRS occasion, to the one or more receiving user equipments.

Advantageously, the SCI and the associated SL-PRS may be transmitted in a starting position in the beginning of the mini-slot.

In step 208, responding sidelink positioning reference signals $SL\text{-}PRS_R$ may be received from the receiving user equipments, by the transmitting user equipment.

In step 210, the position of the transmitting user equipment is determined by applying a suitable positioning technique using the received responding sidelink positioning reference signals $SL\text{-}PRS_R$.

In step 206, the sidelink positioning reference signal SL-PRS sent by the transmitting user equipment may be multiplexed with the sidelink positioning reference signal SL-PRS of the other transmitting user equipments belonging to a same set of multiplexed user equipments, in one or more mini-slots among the mini-slots, in time division multiplexing (TDM) or in frequency division multiplexing (FDM).

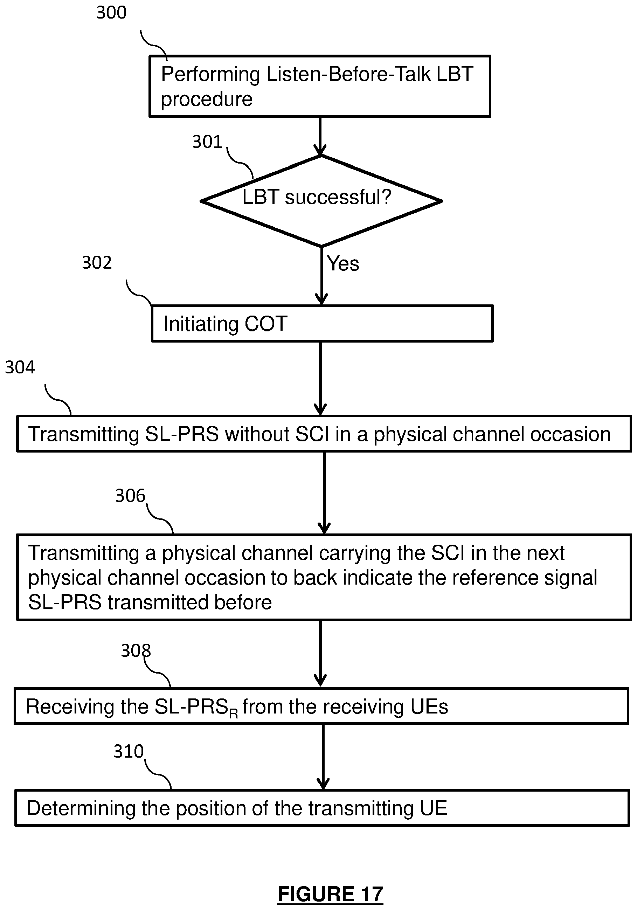

Figure 17 is a flowchart representing a sidelink positioning method for positioning a transmitting user equipment using a shared resource pool (transmission of the SL-PRS signal with physical channels), according to an embodiment using back indication of the SCI.

In step 300, a Listen Before Talk procedure is performed to initiate Channel Occupancy Time procedure COT,

In step 302, if the LBT is successful (clock 301), a Channel Occupancy Time procedure COT is initiated by the transmitting user equipment.

In step 304, the sidelink positioning reference signal SL-PRS is sent in a SL-PRS occasion, without previously transmitting its associated SCI before, after the first starting position with a physical channel occasion,

In step 306, a physical channel (e.g. PSCCH) carrying the SCI is sent in the next physical channel occasion to back indicate the reference signal SL-PRS transmitted before in step 304. The location of the sidelink (SL) resources of the transmitting user equipment is indicated by the transmitted SCI. The SCI may further indicate the location of a physical channel in the next symbols.

In step 308, responding sidelink positioning reference signals $SL\text{-}PRS_R$ may be received from the receiving user equipments, by the transmitting user equipment.

In step 310, the position of the transmitting user equipment is determined by applying a suitable positioning technique using the received responding sidelink positioning reference signals $SL\text{-}PRS_R$.

In response to the receipt of the SL-PRS signal, sent at step 308, at the receiving user equipment side, the received SL-PRS symbols sent by the transmitting user equipment, may be stored, if the receiving user equipment does not detect SCI in a first physical channel occasion. The received SCI may be decoded, if the receiving user equipment detects SCI in a second physical channel occasion, and if the decoding is successful, the SL-PRS is searched in the stored symbols based on the indication provided in the decoded SCI.

The embodiments of the invention may be used in various applications such as Machine-To-Machine (M2M), Web-of-Things (WoT), and Internet of Things (IoT) (for example vehicle-to-everything V2X communications) involving networks of physical devices, machines, vehicles, home alliances and many other objects connected to each other and provided with a connectivity to the Internet and the ability to collect and exchange data without requiring human-to-human or human-to-computer interactions.

The embodiments of the disclosure have particular advantages for V2X applications and in particular 5G NR V2X, where the sidelink transmissions may be used to exchange transport blocks, such as user data traffic, between two vehicles, in the unlicensed spectrum.

The communication system 100 may be used in various consumer, commercial, industrial, and infrastructure applications. Exemplary consumer applications comprise connected vehicles (Internet of Vehicles IoV), home automation/smart home, smart cities, wearable technology, and connected health. Exemplary commercial applications comprise medical and healthcare and transportation. In the medical field, a digitized healthcare system connecting medical resources and healthcare services may be used in which special monitors and sensors are used to enable remote health monitoring and emergency notification. Exemplary industrial applications comprise applications in agriculture, for example in farming using sensors, to collect data on temperature, rainfall, humidity, wind speed, and soil content. Exemplary infrastructure applications may comprise the use of IoT devices to perform monitoring and controlling operations of urban and rural infrastructures such as bridges and railway tracks.

The transmitting user equipment 1 and/or the receiving user equipment 5 may be any physical internet-enabled device/object provided with required hardware and/or software technologies enabling communication over Internet. The transmitting user equipment 1 and/or the receiving user equipment 5 may be any standard internet connected-devices such as desktop computers, servers, virtual machines laptops, smart-phones, tablets. In some applications, the transmitter 1 and/or the receiver 5 may be any IoT/M2M device or connected device operating in an IoT/M2M network such as medical devices, temperature and weather monitors, connected cards, thermostats, appliances, security devices, drones, smart clothes, eHealth devices, robots, and smart outlets.

Embodiments of the present invention can take the form of an embodiment containing software only, hardware only or both hardware and software elements.

Furthermore, the methods described herein can be implemented by computer program instructions supplied to the processor of any type of computer to produce a machine with a processor that executes the instructions to implement the functions/acts specified herein. These computer program instructions may also be stored in a computer-readable medium that can direct a computer to function in a particular manner. To that end, the computer program instructions may be loaded onto a computer to cause the performance of a series of operational steps and thereby produce a computer implemented process such that the executed instructions provide processes for implementing the functions specified herein.

It should be noted that the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

While embodiments of the invention have been illustrated by a description of various examples, and while these embodiments have been described in considerable detail, it is not the intent of the applicant to restrict or in any way limit the scope of the appended claims to such detail.

In particular, although the invention has particular advantages in embodiments using OFDM modulation, the invention also applies to other type of single-carrier and multi-carrier modulation.

Additional advantages and modifications will readily appear to those skilled in the art. The invention in its broader aspects is therefore not limited to the specific details, representative methods, and illustrative examples shown and described.

## Claims

1. A transmitting user equipment (1) configured to perform sidelink positioning to determine the transmitter user equipment position, wherein said transmitting user equipment is configured to transmit a sidelink positioning reference signal SL-PRS and associated sidelink control information SCI to at least one receiving user equipment (5) in a slot, using a dedicated resource pool to perform said sidelink positioning, the SCI indicating the sidelink resources for the transmission of said SL-PRS signal, wherein the transmitting user equipment is configured to initiate a Channel Occupancy Time procedure COT before transmitting said SCI and said SL-PRS signal to said at least one receiving user equipment, the transmitting user equipment being configured to perform a Listen Before Talk LBT procedure to initiate said COT, wherein the transmitting user equipment (1) is configured to:

     - transmit said sidelink positioning reference signal SL-PRS in a SL-PRS occasion, to said at least one receiving user equipment, if the Listen Before Talk procedure succeeds, and
     - determine the transmitter user equipment position using one or more responding sidelink positioning reference signals SL-PRS$_R$, each being received from one of said at least one receiving user equipment wherein a slot is divided into a plurality of K mini-slots, the location of the sidelink (SL) resources to be used for the transmission of the reference signal SL-PRS by the transmitting user equipment being indicated by the associated SCI, wherein the transmitting user equipment is configured to transmit the SCI and then the associated SL-PRS in the beginning of a mini-slot.

2. The transmitting device of claim 1, wherein a mini slot comprises:

   - an Automatic Gain control AGC field comprising symbols used for level control at the beginning of the mini-slot ;
   - said SCI information ;
   - said signal SL-PRS ; and
   - a gap comprising symbols used as guard periods.

3. The transmitting device of any preceding claim, wherein the transmitting user equipment is configured to use its sidelink control information SCI to reserve a SL-PRS resource in a mini-slot that is different from the mini-slot where that sidelink control information SCI is transmitted.

4. The transmitting device according to any preceding claim, wherein the SCI further comprises a Channel Occupancy Time (COT) sharing authorization flag indicating whether a receiving user equipment is allowed to use the COT initiated by the transmitting user device to transmit the responding SL-PRS.

5. The transmitting device according to any preceding claim, wherein the transmitting user equipment is configured to reserve SL-PRS resources in a mini-slot using its associated sidelink control information SCI for the transmission of the responding SL-PRS sent back by a receiving user equipment.

6. The transmitting device according to claim 5, wherein the comb pattern and/or the length of the sidelink positioning reference signal SL-PRS transmitted from the transmitting user equipment and/or the comb pattern and/or the length of the responding reference signal SL-PRS$_R$ transmitted from the at least one receiving user equipment, in the reserved resource, is indicated in the sidelink control information SCI transmitted by the transmitting user equipment.

7. A communication system comprising at least two user equipments connected through a wireless communication network, said user equipments comprising at least one transmitting user equipment according to any preceding claim 1 to 7 and at least one receiving user equipment.

8. The communication system of any claim 6 and 7, wherein the system comprises a group of multiplexed user equipments comprising two or more transmitting user equipments, wherein the sidelink positioning reference signal SL-PRS of a transmitting user equipment in the group of multiplexed user equipments is multiplexed with the sidelink positioning reference signal SL-PRS of the other transmitting user equipments of the group, in one or more mini-slots, in time division multiplexing (TDM) or in frequency division multiplexing (FDM).

9. The communication system of claim 8, wherein a transmitting user equipment in the group of multiplexed user equipment is configured to start transmitting its respective sidelink positioning reference signal SL-PRS and its associated sidelink control information SCI in a mini-slot that is different from the mini-slot used by at least another transmitting user equipment of the group.

10. The communication system of any claim 8 and 9, wherein a transmitter user equipment is configured to transmit a SL-PRS signal at a starting position in a mini-slot, and wherein the system is adapted to preconfigure a starting position in each mini-slot and/or the length of each mini-slot for each resource pool.

11. The communication system of any preceding claim 8 to 10, wherein the group of multiplexed user equipments comprises different sets of user equipments, the sidelink positioning reference signals of the user equipments of at least one set of User equipments being multiplexed with each other in a given mini-slot of the slot, in frequency division multiplexing (FDM), while the sidelink positioning reference signals of the user equipments of at least another set of User equipments of the group are multiplexed with each other in another mini-slot of the time slot, in time division multiplexing (TDM).

12. The communication system according to any preceding claim 6 to 11, wherein a transmitting user equipment is configured to share its initiated Channel Occupancy Time procedure (COT) with other user equipments of said group of multiplexed user equipments, said other user equipments using the shared COT to transmit their respective sidelink positioning reference signals to a receiving user equipment that is different from the transmitting user equipment that initiated the COT.

13. The communication system according to claim 12, wherein the user equipment using the shared COT of a transmitting user device which initiated the COT is configured to transmit its reference signal SL-PRS to a user equipment that is different from said transmitting user device.

14. The communication system according to any preceding claim 12 and 13, wherein the system comprises a transmitting user equipment configured to transmit its sidelink positioning reference signal SL-PRS1 and sidelink control information SCI to a target user equipment of the system, said transmitting user equipment initiating a first COT, and the system comprises another transmitting user equipment initiating a second COT, the target user equipment being configured to use said second COT initiated by the second transmitting user equipment to transmit its SCI and its respective sidelink positioning reference signal to said transmitting user equipment which initiated the first COT.

15. A method for determining the sidelink position of a transmitter user equipment in a communication system, wherein said the method comprises transmitting a sidelink positioning reference signal SL-PRS and associated sidelink control information SCI to at least one receiving user equipment in a slot, using a dedicated resource pool, the SCI indicating the sidelink resources for the transmission of said SL-PRS signal, wherein the method comprises initiating (202) a Channel Occupancy Time procedure COT before transmitting said SCI and said SL-PRS signal to said at least one receiving user equipment, the method comprising performing (200) a Listen Before Talk LBT procedure to initiate said COT, wherein the method comprises :

   - transmitting (202) said sidelink positioning reference signal SL-PRS in a SL-PRS occasion, to said at least one receiving user equipment, if the Listen Before Talk procedure succeeds, and
   - determining (210) the transmitter user equipment position using one or more responding sidelink positioning reference signals SL-PRS$_R$, each being received from one of said at least one receiving user equipment wherein a slot is divided into a plurality of K mini-slots, the location of the sidelink (SL) resources to be used for the transmission of the reference signal SL-PRS by the transmitting user equipment being indicated by the associated SCI, wherein the method comprises transmitting (204) the SCI and then the associated SL-PRS in the beginning of a mini-slot.

**FIGURE 1**

1 slot

| AGC | PSSCH | PSSCH | SL-PRS | PSSCH | AGC | PSSCH | PSSCH | GAP |
|-----|-------|-------|--------|-------|-----|-------|-------|-----|
|     | SCI   |       |        |       |     | SCI   |       |     |

LBT
succeeds

Transmisison
starts

**FIGURE 2**

10

**FIGURE 3**

FIGURE 4

**FIGURE 5**

**FIGURE 6**

**FIGURE 7**

1 slot          1 slot          1 slot

UE1 LBT Type 1 → | SCI1 | SL-PRS1 (UE1→UE2) | | | | | SL-PRS2 (UE2→UE1) | |

**FIGURE 8**

60

MS1             MS2

1 slot

UE1 LBT Type 1 → | AGC | SCI1 | SL-PRS1 (UE1→UE3) | GAP | AGC | SCI2 | SL-PRS2 (UE2→UE3) | GAP |

UE1         UE2 LBT Type 2        UE2

COT sharing indication from UE1 to UE2

UE2 uses COT intiated by UE1 to transmit to UE3

**FIGURE 9**

| 1 slot | 1 slot | 1 slot |
|---|---|---|

UE1 LBT
Type 1 → | SCI1 | SL-PRS1 (UE1→UE2) |

UE3 LBT
Type 1 → | SCI3 | SL-PRS3 (UE3→UE2) | SL-PRS2 (UE2→UE1) |

COT3

UE2 uses COT3
to transmit to UE1

**FIGURE 10**

SL-PRS occasion

1 slot

1st PSCCH occasion

2nd PSCCH occasion

| AGC | PSSCH | PSSCH | AGC | SL-PRS | AGC | PSSCH | PSSCH | GAP |
| | SCI0 | | | | | SCI | | |

t1= LBT
succeeds

t2=Transmisison
starts

**FIGURE 11**

**FIGURE 12**

**FIGURE 13**

**1 slot**

Dummy data or
copy of SL-PRS

| AGC | PSSCH / SCI | PSSCH | SL-PRS | PSSCH / SCI | PSSCH | GAP |

LBT
succeeds

**FIGURE 14**

**1 slot**

| AGC | PSSCH / SCI | PSSCH | AGC | PSSCH / SCI | SL-PRS | PSSCH / SCI | PSSCH | GAP |

LBT
succeeds

Dedicated PSCCH
occasion

**FIGURE 15**

200

Performing Listen-Before-Talk LBT procedure

201

LBT successful?

Yes

202

Initiating COT

204

Transmitting SCI in a starting point in a mini- slot

206

Transmitting the SL-PRS, in a mini-slot

208

Receiving the SL-PRS$_R$ from the receiving UEs

210

Determining the position of the transmitting UE

**FIGURE 16**

300

Performing Listen-Before-Talk LBT procedure

301

LBT successful?

302

Yes

Initiating COT

304

Transmitting SL-PRS without SCI in a physical channel occasion

306

Transmitting a physical channel carrying the SCI in the next physical channel occasion to back indicate the reference signal SL-PRS transmitted before

308

Receiving the $SL\text{-}PRS_R$ from the receiving UEs

310

Determining the position of the transmitting UE

**FIGURE 17**

Europäisches
Patentamt

European
Patent Office

Office européen
des brevets

# EUROPEAN SEARCH REPORT

| Application Number |
|---|
| **EP 23 30 6026** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/015310 A1 (WU SHUANSHUAN [US] ET AL) 19 January 2023 (2023-01-19) <br> * paragraphs [0065] - [0142] * <br> ----- | 1-15 | INV. <br> H04L5/00 <br> H04L27/00 |
| | | | **TECHNICAL FIELDS SEARCHED (IPC)** |
| | | | H04L |

The present search report has been drawn up for all claims

| Place of search | Date of completion of the search | Examiner |
|---|---|---|
| The Hague | 27 November 2023 | Papadogiannis, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 30 6026

This annex lists the patent family members relating to the patent documents cited in the above-mentioned European search report.
The members are as contained in the European Patent Office EDP file on
The European Patent Office is in no way liable for these particulars which are merely given for the purpose of information.

27-11-2023

| Patent document cited in search report | Publication date | Patent family member(s) | Publication date |
|---|---|---|---|
| US 2023015310 A1 | 19-01-2023 | NONE | |

EPO FORM P0459

For more details about this annex : see Official Journal of the European Patent Office, No. 12/82

**REFERENCES CITED IN THE DESCRIPTION**

**Non-patent literature cited in the description**

- *ETSI EN 301 893, 5 GHz RLAN; Harmonised Standard covering the essential requirements of article 3.2 of Directive 2014/53/EU (v2.1.1)*, May 2017
- Physical layer procedures for shared spectrum channel access. *3GPP TS 37.213 v17.2.0*, 2022
- Physical channel and modulation V17.2.0. *3GPP TS 38.211*, 2022